# NEW EUROPEAN PATENT SPECIFICATION

(11) **EP 3 030 503 B2**
(45) Date of publication and mention of the opposition decision: **30.12.2020**
(45) Mention of the grant of the patent: 22.11.2017
(21) Application number: 14831061.8
(22) Date of filing: 03.12.2014
(51) Int. Cl.: B65D 85/804

(54) **CAPSULE AND DEVICE FOR PREPARING BEVERAGES AND METHOD FOR PRODUCING CAPSULES**
KAPSEL UND EINRICHTUNG FÜR DIE ZUBEREITUNG VON GETRÄNKEN UND VERFAHREN ZUR HERSTELLUNG VON KAPSELN.
CAPSULE ET SYSTEME POUR LA PREPARATION DE BOISSONS ET METHODE POUR LA PRODUCTION DE CAPSULES

(30) Priority: 03.12.2013 NL 2011887; 10.02.2014 NL 2012232; 21.07.2014 WO PCT/IB2014/063282
(43) Date of publication of application: 15.06.2016
(60) Divisional application: 17202917.5 / 3 354 596
(73) Proprietor: Biserkon Holdings Ltd., 1307 Nicosia (CY)
(72) Inventor: ANDREAE, Jan, NL-1261 XE Blaricum (NL); KLEP, Mark Eric Anton Arthur, NL-4281 NJ Andel (NL); ZWEED, Sander Gordon, NL-1401 VJ Bussum (NL)
(74) Representative: Patentwerk B.V.
(86) International application number: PCT/IB2014/002648
(87) International publication number: WO 2015/082982

(56) References cited:
- EP-A1- 2 218 653
- EP-A1- 2 287 090
- WO-A1-2010/063644
- WO-A1-2012/003891
- WO-A1-2012/160342
- WO-A1-2013/029184
- WO-A1-2013/076551
- WO-A1-2013/120997
- WO-A1-2013/157924

## Description

The invention relates to a capsule for use in a device for preparing beverages. The invention furthermore relates to a method for producing a capsule according to the invention. The invention also relates to an assembly of such a capsule and a device for preparing beverages.

From the prior art, various capsules for use in a device for preparing beverages are known. A known capsule, as is described, for example, in EP0512468, comprises a substantially frustoconical housing consisting of a peripheral wall, an end inlet side adjacent to the peripheral wall, and an engagement edge which is connected laterally with respect to the peripheral wall to the peripheral wall for clamping the capsule into a capsule holder of the device for preparing beverages. The engagement edge is connected to a perforatable film/foil which also forms the outlet side of the capsule. The housing is filled with a substance to be extracted, such as ground coffee beans. This known capsule can be placed in a device for preparing a beverage. To this end, the capsule is placed in a capsule holder which successively clamps the capsule, resulting in the inlet side of the capsule being perforated. Subsequently, heated water will be passed at relatively high pressure (6-20 bar) into the capsule holder and thus via the inlet side into the capsule, where the water will come into contact with the substance to form the final beverage. As a result of the pressure build-up in the capsule, the film/foil will bulge in such a manner that the film/foil will be perforated by the capsule holder, as a result of which the beverage produced can leave the capsule. The housing of the capsule described in the abovementioned patent is made of aluminium. Although aluminium has relatively good barrier properties for preserving coffee over a prolonged time, the processing of aluminium is relatively difficult. In addition, the capsule will be thrown away after use, usually as part of the general waste, which results in a considerable environmental load.

EP2287090 discloses capsules for the preparation of a coffee extract having a structure facilitating perforation for injection of water, which capsule comprises a frusto-conical body comprising a rim, a sidewall and an inlet wall, as well as a lower delivery was, a predosed amount of coffee in the capsule and a structure in relief on the inlet wall.

WO2013/029184 disclose multi-layered material and containers, such as beverage capsules, as well as methods of making the same. The material comprises a barrier later formed of a material adapted for deterring one or more undesired elements from passing through the barrier layer.

US2012/0097602 discloses a biodegradable beverage filter cartridge having a biodegradable fluid permeable beverage filter component; an openable lid component and a beverage receptacle component composed of an exterior biodegradable heat-resistant structural polymer layer, an inner protective seal layer of biodegradable polymer and an intermediate barrier layer.

It is an object of the invention to provide a capsule for preparing beverages which, in particular after use, results in a reduced environmental load.

To this end, the invention provides a capsule according to claim 1. By manufacturing the capsule from one or more (biologically) compostable materials, the capsule will be disposed of after use, preferably with the green waste (vegetable, fruit and garden waste), following which the capsule is molecularly decomposed in a biological manner by microorganisms, and optionally after supplying activation heat and moisture (water). In this case, it is also preferred if the capsule components are made of biomaterials ("biobased materials"), which are materials which originate from organisms which are alive or have been alive, further increasing the sustainability of the capsule and further reducing the environmental load. Organic molecules which substantially constitute the capsule are in this case converted into smaller organic molecules and eventually into water, carbon dioxide and biomass (humus), and possibly into mineral constituents, such as salts. In industrial composting installations, the complete composting process usually lasts a few weeks. Such a composting process is also referred to as biodegradation. Manufacturing all components of the capsule from completely compostable materials results in a significant environmental advantage. This offers a response to the permanent aim to keep the waste stream under control and to deal responsibly with residual waste. In addition to the lower environmental load which is associated with the capsule according to the invention, the substantially closed capsule is highly suitable for preserving the substance, usually coffee, over a prolonged period of time by using an oxygen barrier, preferably both in the housing and the closing element. There is thus no need for a separate form of packaging to ensure the quality of the substance, in particular of the coffee.

The engagement edge is usually connected to an end of the peripheral wall which is facing away from the end side (bottom). This results in an asymmetrical capsule, where the plane of symmetry of the capsule is fixed by the peripheral edge (flange). Usually, the peripheral wall will have a substantially frustoconical design, so as to be able to use the capsule in known devices for preparing beverages. The housing is preferably substantially rigid (dimensionally stable). Regarding design, the capsule preferably corresponds to the capsule which is described in the abovementioned patent EP0512468.

As the at least one oxygen barrier used is generally particularly affected by moisture and will disintegrate relatively quickly and easily when it comes into contact with moisture (water), it is particularly advantageous if the oxygen barrier layer is surrounded (enclosed) by at least one protective material layer which completely protects the oxygen barrier layer from the (moist) atmosphere surrounding the capsule. The term surrounding atmosphere is understood to mean the ambient air which surrounds the capsule. The surrounding material layer is in this case made from a material which is relatively unaffected by moisture and is relatively stable in a moist environment, and will therefore not disintegrate or degrade easily upon coming into contact with moisture. Preferably, this material layer which protects the oxygen barrier layer and thus forms a protective material layer is not readily permeable to moisture, if at all, as a result of which the protective material layer functions as a kind of moisture barrier layer, so that moisture cannot quickly and easily come into contact, if at all, with the oxygen barrier layer which is situated behind and is sensitive to moisture. This leaves the oxygen barrier layer intact and preserves the capsule and its contents as such. In this case, it is important that the oxygen barrier layer is completely protected from the outside environment (the immediate surroundings), as leaving the moisture-sensitive oxygen barrier layer partly uncovered, as a result of which the oxygen barrier layer can come into contact with moist ambient air, already results in disintegration of eventually a substantial part of the oxygen barrier layer or even of the entire oxygen barrier layer, as a result of which the capsule contents would be exposed to moisture and oxygen in the immediate surroundings. At least one protective material layer is positioned at least on an outer side of the housing in order to act as a partition wall between the moisture-sensitive oxygen barrier layer and the immediate surroundings of the housing/capsule. However, in addition, it is also conceivable to use at least one protective material layer on an inner side of the housing, as a result of which direct contact between coffee (or another substance contained in the capsule) and the oxygen barrier layer can also be prevented, which may further benefit the stability of the oxygen barrier layer. Preferably, the oxygen barrier layer will then be completely enclosed (surrounded) by one or more protective material layers. The at least one surrounding material layer usually also functions as a substantially dimensionally stable support layer (or substrate layer) for the - usually relatively thin-walled, soft - oxygen barrier layer. Preferably, the housing is made from a laminate comprising several material layers, of which the at least one oxygen barrier layer and the at least one protective material layer surrounding the oxygen barrier layer form part. In this case, preferably each material layer is compostable. By using a laminate of material layers, the housing can be given the desired properties in an efficient manner. The laminate layers may in this case be bonded to one another. However, it is preferred if the laminate layers are produced in a single manufacturing step by means of a co-injection process (injection-moulding), as a result of which the different material layers will be integrally connected to one another. It is conceivable for an outermost material layer to be provided with an additional material layer, in particular a coating, after and during manufacture of the capsule housing, which is substantially impermeable to moisture, in order to be able to protect the coffee (or another substance contained in the capsule) even better from moisture, and thus preserve it even more effectively. An example of a suitable material for this additional moisture-impermeable material layer (coating) are a cellulose, such as nitrocellulose, hydroxyethyl cellulose, or a polysaccharide, such as starch, which are also compostable as such. In the case of starch, it is advantageous to enrich the starch with gelatine and/or a fatty acid ester (E-471).

Preferably, the at least one material layer surrounding the oxygen barrier layer provides the housing with dimensional stability and strength. An example of suitable materials for this purpose are compostable polyesters, in particular a polylactic acid (PLA), preferably a polylactic acid in the amorphous state. In addition, PLA acts as a reasonable to good moisture barrier in order to be able to protect the oxygen barrier for a sufficiently long time - at least a few months - from ambient moisture. A polyester, and in particular PLA, is usually relatively stiff and dimensionally stable, even at a higher temperature of approximately 90°C to which the capsule is subjected when preparing a hot beverage, such as coffee. Although crystalline PLA is thermally more stable than amorphous PLA, it is preferable to use amorphous PLA, since amorphous PLA is more readily compostable than crystalline PLA, and a capsule based on amorphous PLA also meets the compostability standard EN13432 which specifies that a material has to have decomposed within 12 weeks by at least 90% into CO₂, water, and small mineral particles (smaller than 2 by 2 mm). Incidentally, a housing based on amorphous PLA will also be able to be made sufficiently strong by means of a sufficiently thick wall (0.3-0.6 mm) and/or the frustoconical design of the side wall and/or any additional reinforcement element in the transition region between the end side and the peripheral wall. Incidentally, amorphous PLA can be obtained during injection-moulding by cooling the PLA relatively quickly and to a sufficient degree to a temperature of approximately 40-50 degrees Celsius. The injection-moulding process is facilitated if PLA based on sugarcane and/or sugar beet is used, and these raw materials will also result in an improved capsule housing with a relatively high temperature resistance. The thermal stability of PLA can also be improved by using a racemic mixture of lactic acid during the production of polylactic acid, resulting in a poly-D/L-lactic acid. The thermal stability of the PLA (or an alternative polyester) can be improved further by the addition of one or more (inorganic) minerals to the PLA, as a result of which de facto a composite material is produced. The material layer comprises between 85 and 100% by weight of polyester, in particular (amorphous) PLA. Such inorganic particles preferably consist of inorganic layered, fibrous or platelike particles, usually microparticles and/or nanoparticles, comprising natural or synthetic clay minerals, such as mica, kaolinite, vermiculite, halloysite, montmorillonite, zeolite, talc, and the like. In particular (compostable) silica (micro)fibres (SiO2), usually produced by means of sol-gel technology, are readily compostable and significantly reinforce the structure of the PLA. An advantageous amount of silica fibres in the material layer comprising PLA is between 0 and 15% by weight. Furthermore, it is advantageous if (compostable) talc is used in the material layer comprising PLA, since talc also has a lubricating effect which makes the housing less fragile and thus reinforces it. The talc content in this material layer is preferably between 0 and 15%. This material layer, which also acts as a sufficiently efficient moisture barrier, is preferably made of a compostable composite of (amorphous) PLA, silica fibres and talc, as described above, and preferably completely encloses the oxygen barrier. The total wall thickness of the housing, in particular formed by the thickness of this composite from which the housing is preferably made, is preferably between 0.3 and 0.6 millimetre. In this case, the side wall has a greater thickness, in particular in the order of magnitude of 0.5-0.6 mm, and in this case the end side and/or the engagement edge have a small wall thickness, in particular in the order of magnitude of 0.3 mm. A relatively thin-walled end side facilitates cutting of the end side by blades of a capsule holder of a device for preparing beverages when closing the capsule holder. A relatively thin-walled engagement edge facilitates clamping of the capsule at the location of the engagement edge. A relatively thick-walled side wall (peripheral wall) increases the dimensional stability and strength of the capsule. Incidentally, the oxygen barrier layer, being a relatively thin layer with a typical thickness of tens of microns, will be incorporated in the surrounding protective material layer or material layers.

The oxygen barrier may be made of various compostable materials and is, at least partly made of polyvinyl alcohol (PVOH). At this moment, PVOH is most preferred as the base material due to its relatively good barrier properties to oxygen and the relatively good compostability. A further advantage of PVOH is the fact that this material bonds relatively well to a material layer comprising PLA without the use of a separate bonding agent. A drawback of PVOH is the water solubility of this material, due to which it is important to protect this material from ambient moisture, which is possible, for example, by using one or more of the abovementioned protective material layers. Another drawback of PVOH is the fact that it is relatively flammable and therefore particularly difficult to injection-mould at the usual injection-moulding temperatures of over 200 degrees Celsius. In this case, it is advantageous if the PVOH is mixed with an aliphatic polyol, preferably glycerol, which considerably facilitates injection-moulding. Preferably, the amount of PVOH (or a different oxygen-impermeable base material) is at least 50% by weight. Preferably, the amount of polyol, in particular glycerol (glycerine), is in this case between 10 and 50% by weight. Instead of glycerol, it is also possible to use PLA, polypropene carbonate (PPC) or another compostable polyester. From an aesthetic point of view, it is furthermore advantageous to provide the oxygen barrier layer with talc. Talc has a neutral, white colour and prevents the oxygen barrier layer from being too clearly visible to users through the usually slightly transparent surrounding material layer.

A barrier layer against oxygen comprising one or more synthetic or natural polymers may furthermore comprise a crosslinking agent, such as silane, glyoxal, melamine resin and the like. Preferably, such a barrier layer against oxygen is made from compostable material and therefore natural polymers, such as starch, chitosan, and synthetic polymers, such as PVOH, are preferred. In an embodiment, the material layer furthermore comprises a wax and/or a filler, such as clay, which further increases the barrier function.

It is conceivable to use several oxygen barrier layers in the housing. These several oxygen barrier layers may be made from the same material. These several oxygen barrier layers may be made from different materials. These several oxygen barrier layers may abut one another, but may also be separated by one or more intermediate material layers. In a preferred embodiment, the housing comprises at least one moisture-sensitive oxygen barrier layer, for example made of PVOH, which is protected from the immediate surroundings by at least one covering material layer, at least one covering material layer of which is formed by a relatively moisture-resistant oxygen barrier, for example made of cellulose and/or TPC.

If desired, it is also possible to use a metallized film/foil as a barrier to oxygen and/or as a water (vapour) barrier. Preferably, an aluminium coating is applied to an already formed material layer of the laminate for this purpose. Generally though, this valiant embodiment is not preferred as such a metal coating will usually compromise the compostability of the capsule. In addition, a capsule comprising metal is not expected to be perceived as being compostable by the end user.

A further material layer of the laminate may, if desired, function as protective coating and/or as coloured layer to provide the capsule with a desired colour. An example of such a layer is formed by a compostable polymer selected from the group consisting of compostable polyesters, PLA, polyhydroxyalkanoates, polycaprolactones, polybutylene succinate adipate, poly(butylene adipate co-terephthalate), PLA/caprolactone copolymers, biodegradable polyethylene and nitrocellulose. Another example of a protective coating is formed by biodegradable polyesters, biodegradable polyethylene, PLA and PLA derivatives.

The oxygen barrier layer preferably forms between 0 and 15% by weight of the housing. The at least one material layer surrounding the barrier layer preferably forms between 85 and 100% by weight. As has already been mentioned, the oxygen barrier layer is enclosed as a (thin) layer by the surrounding material layer or material layers. In this case, the surrounding material layer or material layers (together) form the inner wall and the outer wall of the housing and in doing so preferably completely enclose the oxygen barrier. All the above-mentioned material layers are made of a compostable material. Often, the oxygen-impermeable barrier layer is sensitive to water, as a result of which it is preferred to protect this barrier layerfrom water (vapour) by enclosing the barrier layer with at least two surrounding (water-impermeable) material layers.

The laminate from which the housing of the capsule is made is preferably produced by co-injection of several laminate layers which are connected to one another during injection-moulding and thus form a composite. Preferably, this co-injection process takes place at an elevated temperature at which the laminate layers will be liquid, the mould, and thus the housing to be produced, being cooled relatively quickly and to a sufficient degree during/after injection, as a result of which at least one material layer, in particular a material layer substantially made of PLA, will assume an amorphous state. Research has shown that amorphous PLA is significantly more compostable than (semi)crystalline PLA. The stiffness of the amorphous PLA can be increased in an advantageous manner by adding one or more additives which increase stiffness. Additives which are suitable for this purpose are talc and, in particular, addition of (inorganic) fibres to the PLA. The talc usually also improves the heat resistance of the housing. Examples of suitable fibres are fibres made of silica, alumina-borate oxide and titanium oxide.

The capsule preferably comprises a compostable sealing element which is preferably connected to the engagement edge and is configured to substantially seal a space between the capsule and a device for preparing beverages while the capsule is clamped in the device. This compostable sealing element which is preferably formed by a sealing ring is preferably made of polyester, more preferably from a(n) (amorphous) polylactic acid (PLA). This amorphous structure may, for example, be obtained by injection-moulding the PLA at relatively low temperatures of between 20 and 40°C, preferably of between 25 and 30°C. At this low processing temperature, the PLA does not have the opportunity to crystallize, resulting in an amorphous state. However, if the temperature is increased (to above 55-60°C), for example during regular use of the capsule, the amorphous state of the PLA will be crystallized in part, resulting in a semicrystalline state. This process is also referred to as "cold crystallization". At this elevated temperature of the crystallizing PLA, the PLA becomes rubbery, with the molecular tension decreasing and relaxation occurring. After cooling of the capsule, following use, the semicrystalline state of PLA in the sealing element, which becomes hard and stiff at lower temperature, will continue, significantly facilitating the subsequent ejection of the capsule from a capsule holder. The sealing element is preferably also with at least one additive, in particular reinforcing (inorganic) fibres and/or talc, in order to improve the strength of the sealing element. It is also advantageous if the (annular) sealing element is at least partly made of an elastomer based on compostable thermoplastic copolyester (TPC) in order to provide more flexibility for the sealing element, which may benefit the sealing capacity of the sealing element. Usually, the sealing element comprises between 80 and 90% by weight of PLA. Preferably, the sealing element comprises between 10 and 20% by weight of TPC. A suitable TPC is a polymer having the molecular formula -(A)ₘ-(B)ₙ-, in which m>1, n>1 and "A" is formed by rigid polybutene terephthalate (PBT) segments, and "B" is formed by longer chains of soft, amorphous polyether/polyester, such as for example poly(tetramethylene ether glycol terephthalate). By adjusting the ratio of "A" segments and "B" segments, it is possible to change the properties of the TPC. If the sealing element comprises talc, it is also preferably 1-5% by weight. The addition of talc also contributes to the flexibility of the sealing element.

Preferably, the sealing element is at least partly fused together with the engagement edge. This is usually achieved by means of welding, preferably by means of ultrasonic welding. Due to the fact that the contact surfaces of the engagement edge and the sealing element are usually made of substantially the same material, in particular PLA, a relatively strong connection can be produced by fusion. This makes it possible to make the capsule from components which are successively attached to one another to form the ultimate capsule, which usually benefits the manufacturing process and in particular the design and functionality of components. The weld seam (or fusion seam) preferably runs completely around the (peripheral wall of the) housing, as a result of which leaks between the engagement edge and the sealing element can be prevented. It is advantageous if an outer edge of the sealing element is connected to the engagement edge, while an inner edge of the sealing element is not connected to the engagement edge. This improves the flexibility of the (annular) sealing element. In this case, it is conceivable that the width of the outer edge of the sealing element is substantially equal to the width of the inner edge of the sealing element. A part of the sealing element, including for example (inter alia) the inner edge of the sealing element, is preferably situated ata distance from the engagement edge. As a result thereof, gaps or air chambers are formed between the engagement edge and the sealing element, which also benefits the flexibility of the sealing element. In a preferred embodiment, the annular sealing element has a width which substantially corresponds to the width of the engagement edge.

It is advantageous if the sealing element increases the effective diameter of the capsule. This makes it possible to use a standardized housing, while the capsule holder determiners the dimensioning of the sealing element, which can be adapted more easily. In such an orientation, an (outer) part of the sealing element encloses a peripheral side of the engagement edge. Another part of the sealing element will in this case usually be positioned above the engagement edge. An inner peripheral edge of the usually annular sealing element is generally not connected and is situated at a distance from the engagement edge. This facilitates the folding (deforming) of the sealing element during clamping in the capsule holder, which benefits the sealing effect.

The annular sealing element is usually produced separately and is fitted around the housing and attached to the engagement edge after production. The sealing element may be marketed separately. The technical features related to the sealing element may be applied completely independently of the properties and technical features of the housing. However, it is usually preferred for the sealing element and the housing of the capsule to be made from the same base material in order to be able to weld both components to one another. The housing may also be marketed separately, optionally in the filled state, and assembled with the sealing element after transportation.

The material layers of the laminate are preferably welded to one another or glued to one another by means of a completely compostable adhesive. An example of a compostable adhesive is an adhesive which comprises 1 to 70% by weight of compostable polymer, selected from the group consisting of: an aliphatic or partly aromatic polyester and a thermoplastic aliphatic polyester urethane. Another example of a compostable adhesive is formed by biodegradable acryl polymers, biodegradable polyesters, PLA, polyhydroxyalkanoates, polycaprolactones, polybutylene succinate adipate, poly(butylene adipate-co-terephthalate), PLA/caprolactone copolymers, starch, hydrocarbon resins and, of course, pine resin. Preferably, the compostable adhesive comprises a biodegradable acryl polymer or a polycaprolactone-based hot-melt adhesive.

If desired, the compostable adhesive furthermore comprises a tackifying agent, such as a resin. Such a tackifying agent preferably comprises a vegetable resin, such as a rosin and phenolic resin, a terpene polymer, such as a terpene phenolic resin and aromatic modified terpene resin, a styrene resin, coumarone/indene resin, an alkyl phenolic resin, a xylene resin, a C5-type petroleum resin, a C9-type petroleum resin and an alicyclic hydrogenated resin. Preferably, the tackifying agent comprises a vegetable resin, such as a rosin, and/or a terpene polymer, since such tackifying agents have a good adhesiveness in combination with the compostable polymer present in the compostable adhesive.

It is conceivable for the oxygen-impermeable barrier layer to also be substantially impermeable to water vapour, as a result of which the barrier layer can protect the substance in the capsule from contact with ambient moisture and ambient oxygen.

PLA may comprise both the L-enantiomer (PLLA homopolymer) and the D-enantiomer (PDLA homopolymer).

In particular, the capsule is preferably made from a biobased polymer (biopolymer). These are materials which are made from biorenewable (recyclable) raw materials. This thus relates to the origin of the materials. Examples are bioplastics, a term which is used to denote plastics which are made from natural products, such as starch obtained from potatoes or maize, or from cellulose. They are in fact synthetic biopolymers. Biopolymers may be selected from carbohydrates, polysaccharides (for example cellulose, starch, glycogen, hemicellulose, chitin, fructan inulin, lignin and/or pectin substances), gums, proteins, optionally cereals, vegetable and/or animal proteins (such as gluten, whey proteins, and/or gelatin), colloids (such as hydrocolloid, for example natural hydrocolloid, such as gums), other polyorganic acids (such as PLA, polyglycolide and polyhydroxyalkanoate (PHA)), mixtures and/or modified derivatives thereof.

The biobased materials can be renewed (recycled) after use, but may also be composted. As has already been indicated above, composting consists of microbiologically decomposing the materials from which the capsule is made in a relatively short period of time into at least water, carbon and biomass (humus), and optionally methane. In this case, materials are preferably used, in particular polymers, which are decomposed in at most 12 weeks under strict conditions (regarding temperature, moisture and time and the like) into water, carbon dioxide, biomass and methane. These polymers meet EN13432, an international standard for compostable polymers. This standard defines both the test programme and the evaluation criteria which compostable packaging has to meet, such as the speed at which and the degree to which a biodegradable polymer has to decompose under commercial composting conditions. Whether a polymer product is compostable depends partly on the product geometry and any additives, such as for example talc, compostable plasticizers, including glycerine, and/or compostable fillers, including starch.

The plasticizers are preferably selected from the group comprising glycerine, triacetine, triethylene glycol, triphenyl phosphate, polyethylene glycol, propylene glycol, ethyl lactate, methyl lactate, glycerol triacetate, acetyl tributyl citrate, triethyl citrate, diethyl citrate, glycerol acetate, phthalate, sorbitol, maltitol, xylitol, erythritol, fatty acid ester or mixtures thereof. Preferably, the filler comprises silicate, such as talc.

Preferably, the capsule, that is to say the housing and/or the closing element, is at least partly made of polylactic acid or a derivative thereof. The polylactic acid may optionally be mixed with starch in order to improve the speed with which the material decomposes. If necessary, the layer consisting of polylactic acid comprises approximately 2% (m/m) to approximately 20% (m/m) of starch. In a variant embodiment, the polylactic acid furthermore comprises a transition metal stearate, such as a stearate salt of aluminium, antimony, barium, bismuth, cadmium, cerium, chromium, cobalt, copper, gallium, iron, lanthanum, lead, lithium, magnesium, mercury, molybdenum, nickel, potassium, rare earth metals, silver, sodium, strontium, tin, tungsten, vanadium, yttrium, zinc and zirconium. If desired, the layer consisting of polylactic acid comprises approximately 0.5% (m/m) to approximately 5% (m/m) of metal stearate.

If the housing and/or the closing element is at least partly made of polylactic acid, the polylactic acid has to be able to withstand relatively high temperatures of just below the boiling point of water. However, a pure polylactic acid will usually not be suitable for use due to the relatively low glass transition temperature (Tg) of 50° C. In addition, polylactic acids, in particular homopolymers PDLA and PLLA, have a relatively low speed of crystallization which is usually too low to achieve a sufficient degree of crystallization during production of the respective component(s).

It is therefore advantageous if the material used is a liquid polylactic acid compound, which compound consists to at least 94% (m/m) of acid components. It has been found that such a liquid polylactic acid compound does not crystallize above a temperature of 10°C. Such a liquid polylactic acid compound can therefore be used to form a polylactic acid material layer which can withstand relatively high temperatures just below the boiling point of water. Preferably, the compound comprises a total concentration of acid components of at least 95% (m/m), more preferably the concentration of acid components is at least 96% (m/m), 97% (m/m), 98% (m/m), 99% (m/m). Particularly advantageous properties are obtained if the liquid polylactic acid compound comprises a total concentration of acid components of 100% (m/m). It has also been found that it is advantageous if the material used has a composition comprising: a compostable resin of PLLA with a limited fraction (≤5 mol%) of PDLA, enriched with at least one nucleating agent. Preferably, the nucleating agent comprises a combination of (i) preferably between 0 and 25% by weight of inorganic nucleating agent, preferably talc, and (ii) preferably between 0 and 30% by weight of inorganic filler, preferably having a lamellar structure, preferably a clay mineral, in particular an aluminium mineral, such as kaolin.
The housing and the closing element may be made of substantially the same material or have a substantially identical material composition. In this case, the common main constituent is preferably formed by PLA. Optionally, the PLA may be enriched location-specifically with one or more additives in order to regulate, for example, the heat resistance and/or the modulus of elasticity. An additional advantage of using the same polymer for the housing and the closing element is the fact that both components can be welded to one another, so that no adhesive is required.

Preferably, the closing element is formed by a substantially completely compostable film/foil. This film/foil may consist of one material layer or a laminate of several material layers which are preferably mutually connected. In this case as well, one of the material layers may be an oxygen-impermeable barrier. Often, this barrier will also be enclosed by water-impermeable layers to protect the aforementioned oxygen barrier In this way, the film/foil will be given both oxygen-impermeable and water (vapour)-impermeable properties. A material layer of the film/foil which faces the housing can preferably (at elevated temperature) be welded and/or glued to the housing. The closing element may also be designed differently and may also consist of several elements, including for example the combination of a (compostable) film/foil and a (compostable) perforation plate which forms part of the capsule. An example thereof is mentioned in the international patent applications WO2011/159162A1 and WO2011/159163A1, the contents of which are deemed to form part of the contents of the present patent by way of reference.

The invention also relates to a housing for use in a capsule according to the invention.

The invention furthermore relates to an annular sealing element for use in a capsule according to the invention. The sealing element is in this case preferably at least partly made of at least one compostable polyester, in particular a(n) (amorphous) polylactic acid (PLA), preferably 80-90% by weight. More preferably, the sealing element also comprises an elastomer based on compostable thermoplastic copolyester (TPC) (also referred to as TPE of TPC-ET), preferably 10-20% by weight. Usually, the PLA and the TPC will be used as composite material. An example of a suitable TPC has already been mentioned above. Optionally, talc may be added to the aforementioned composite in order to increase the flexibility of the sealing element, preferably in a percentage by weight of 1-5%. Optionally, further additives such as (compostable) colorants and one or more anti-sticking additives are added to the sealing element. The invention also relates to a method for producing a capsule for preparing beverages, according to the invention according claim 38. Preferably, the housing is manufactured in step A) by means of co-injecting in a mould at least one liquefied compostable material to form the at least one oxygen barrier layer, and at least one liquefied compostable material to form the at least one material layer surrounding the barrier layer, following which the housing is cooled to a temperature below the lowest melting temperature of the materials. More preferably, during manufacture of the housing by means of co-injection in step A), the oxygen barrier layer is completely surrounded (enclosed/enveloped) by at least one surrounding material layer. Usually, injection of different materials in the mould is carried out in succession, so that a material layer which has already been injected can cool down sufficiently to become dimensionally stable before one or more subsequent material layers are injected into the mould. Instead of by co-injection, the housing may also be formed by means of thermoforming, usually a laminate which has been manufactured by co-extrusion.

In addition, the invention relates to an assembly of a capsule according to, and a device for preparing beverages, which device comprises a capsule holder for receiving the capsule. In this case, the capsule holder will usually comprise several holder parts which are displaceable with respect to one another between an open position, in which the capsule can be placed in the capsule holder, and a closed position, in which the engagement edge and the sealing element of the capsule are clamped in a substantially liquid-tight manner by the holder parts.

The invention furthermore relates to the use of a capsule according to the invention in a device for preparing beverages.

The invention will be explained by means of the non-limiting illustrative embodiments shown In the figures below, in which.
- Fig. 1 shows a cross section of a capsule according to a first embodiment of the present invention;
- Fig. 2 shows a cross section of a capsule according to Fig. 1, provided with a protective layer;
- Fig. 3 shows a cross section of a capsule according to a second embodiment of the present invention;
- Fig. 4 shows a cross section of a capsule according to Fig. 3, provided with a protective layer;
- Fig. 5 shows a cross section of a housing according to a first embodiment of the present invention;
- Fig. 6 shows a cross section of a capsule according to Fig. 5, provided with a protective layer;
- Fig. 7 shows a cross section of a housing according to a second embodiment of the present invention;
- Fig. 8 shows a cross section of a capsule according to Fig. 7, provided with a protective layer;
- Fig. 9 diagrammatically shows a cross section of a capsule according to a first embodiment of the present invention, provided with a surface-mounted non-attached sealing ring;
- Fig. 10 diagrammatically shows a detail of the sealing ring in a non-attached position;
- Fig. 11 diagrammatically shows a cross section of a capsule according to a first embodiment of the present invention, provided with a surface-mounted attached sealing ring; and
- Fig. 12 diagrammatically shows a detail of the sealing ring in an attached position.

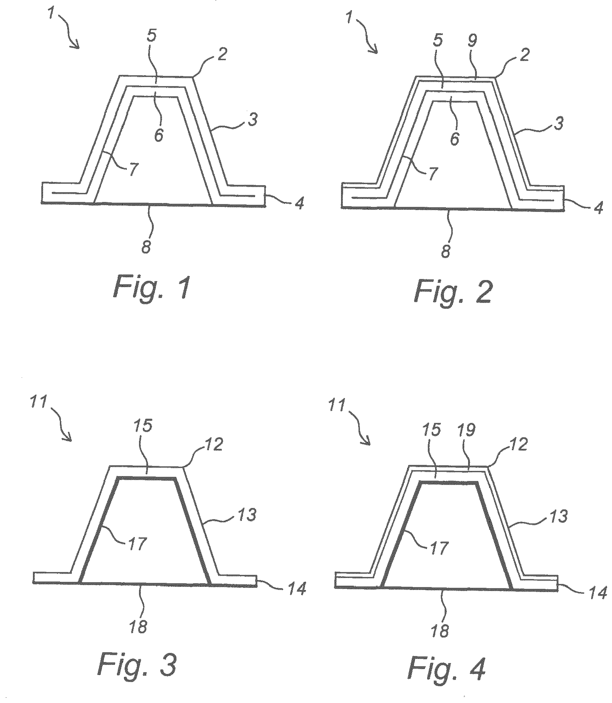

Fig. 1 shows a cross section of a capsule (1) according to a first embodiment of the present invention. The initially substantially closed capsule (1) comprises a housing (2) with a frustoconical peripheral wall (3) and a laterally projecting engagement edge or flange (4) which adjoins the frustoconical peripheral wall (3). This housing (2) is, for example, filled with coffee (not shown) and forms the basis of the capsule (1).

The housing (2) is manufactured, for example, by means of a co-injection technique, as a result of which the housing (2) is composed of an (integrated) laminate of two material layers (5, 6) made of PLA, between which a material layer (7) made of PVOH is arranged. This construction is completely compostable. Preferably, the PLA layers (5,6) are in the amorphous state. In this case, the PLA layers (5,6) enclose the PVOH layer (7) completely. The PLA layers (5, 6) act mainly as a moisture barrier, whereas the PVOH layer (7) acts as an oxygen barrier.

A(n) (under)side of the engagement edge (4) is attached to a substantially compostable film/foil (8) in order to enclose the coffee in a substantially medium-tight manner in the housing (2). The film/foil (8) is preferably also impermeable to water and oxygen. To this end, the film/foil (8) may be composed of several layers of film/foil.

Fig. 2 diagrammatically shows the cross section of a capsule (1) according to Fig. 1. In addition, the capsule (1) is provided with a protective layer (9) of cellulose which is provided on the outer PLA layer (5). This protective layer (9) forms an additional oxygen barrier and moisture barrier to protect the coffee in the capsule (1).

Fig. 3 shows a cross section of a capsule (11) according to a second embodiment of the present invention. The initially substantially closed capsule (11) comprises a housing (12) with a frustoconical peripheral wall (13) and a laterally projecting engagement edge or flange (14) which adjoins the frustoconical peripheral wall (13). This housing (12) is, for example, filled with coffee (not shown) and forms the basis of the capsule (11) and is composed of a layered structure having a PLA layer (15) on the outer side and a material layer (17) made of PVOH on the inner-side. This compound is completely compostable. Preferably, the PLA layer (15) is in the amorphous state.

A(n) (under)side of the engagement edge (14) is attached to a substantially compostable film/foil (18) in order to enclose the coffee in a substantially medium-tight manner in the housing (12). The film/foil (18) is preferably also impermeable to water and oxygen. To this end, the film/foil (18) may be composed of several layers of film/foil.

In this case, the PLA layer (15) and the film/foil (18) together enclose the PVOH layer (17) completely. The PLA layer (15) and the film/foil (18) act mainly as a moisture barrier, whereas the PVOH layer (17) acts as an oxygen barrier.

Fig. 4 diagrammatically shows the cross section of a capsule (11) according to Fig. 3. In addition, the capsule (11) is provided with a protective layer (19) of cellulose which is provided on the outer PLA layer (15). This protective layer (19) forms an additional oxygen barrier and moisture barrier to protect the coffee in the capsule (11).

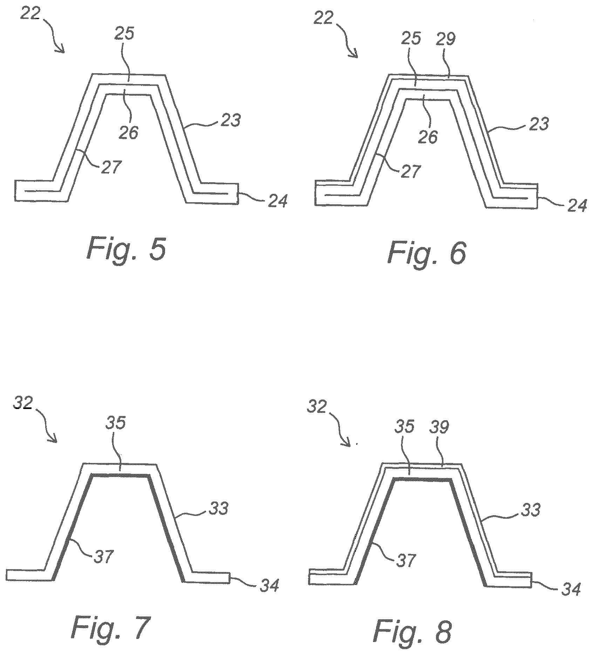

Fig. 5 diagrammatically shows a cross section of a housing (22) according to a first embodiment of the present invention. The housing (22) is provided with a frustoconical peripheral wall (23) and a laterally projecting engagement edge or flange (24) which adjoins the frustoconical peripheral wall (23).

The housing (22) is, for example, made by means of a co-injection technique, as a result of which the housing (22) is composed of a(n) (integrated) laminate of two material layers (25,26) made of PLA, between which a material layer (27) made of PVOH is arranged. This construction is completely compostable. Preferably, the PLA layers (25, 26) are in the amorphous state. In this case, the PLA layers (25,26) enclose the PVOH layer (27) completely. The PLA-layers (25, 26) act mainly as a moisture barrier, whereas the PVOH layer (27) acts as an oxygen barrier.

Fig. 6 diagrammatically shows the cross section of a housing (22) according to Fig. 5. In addition, the housing (22) is provided with a protective layer (29) of cellulose which is provided on the outer PLA layer (25). This protective layer (29) forms an additional oxygen barrier and moisture barrier to protect the coffee in the housing (22).

Fig. 7 shows a cross section of a housing (32) according to a second embodiment of the present invention. The housing (32) is provided with a frustoconical peripheral wall (33) and a laterally projecting engagement edge or flange (34) which adjoins the frustoconical peripheral wall (33). This housing (32) is composed of a layered structure having a PLA layer (35) on the outer side and a material layer (37) made of PVOH on the inner side. This construction is completely compostable. Preferably, the PLA layer (35) is in the amorphous state.

Fig. 8 diagrammatically shows the cross section of a housing (32) according to Fig. 7. In addition, the housing (32) is provided with a protective layer (39) of cellulose which is provided on the PLA layer (35). This protective layer (39) forms an additional oxygen barrier and moisture barrier to protect the coffee in the housing (32).

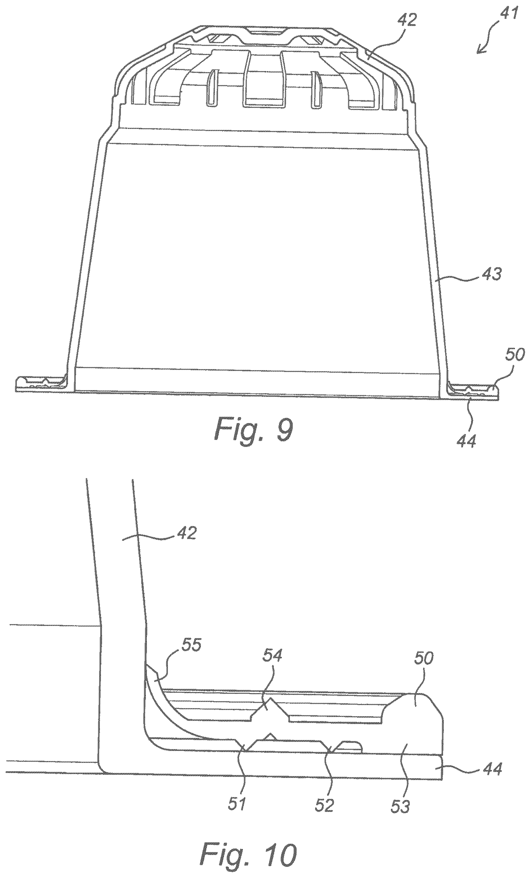

Fig. 9 diagrammatically shows a cross section of a capsule (41) according to the first embodiment of the present invention. The capsule (41) comprises a housing (42) with a frustoconical peripheral wall (43) and a laterally projecting engagement edge or flange (44) which adjoins the frustoconical peripheral wall (43). This housing (42) is, for example, filled with coffee (not shown) and forms the basis of the capsule (41). On the top side of the engagement edge (44), the housing (42) is attached to a surface-mounted sealing ring (50). The sealing ring (50) is made of amorphous PLA provided with one or more additives, such as talc, and is thus substantially completely compostable. The sealing ring (50) is not yet attached to the engagement edge (44).

Fig. 10 diagrammatically shows a detail of the sealing ring (50) and the engagement edge (44) in the non-attached position. On the underside of the ring (50), weld seams (51, 52) are present which can be welded together with the engagement edge (44). The outer peripheral edge (53) of the ring (50) is situated on the engagement edge (44) and can also be welded together with the engagement edge (44). The sealing ring (50) is also provided with an upright circular water-retaining edge (54) which further improves the sealing effect. An inner peripheral edge (55) of the sealing ring (50) is not connected to the housing (42) and extends upwards. This facilitates folding of the sealing ring (50) when the capsule (41) is being clamped into a capsule holder, thus benefitting the sealing capacity of the sealing ring (50).

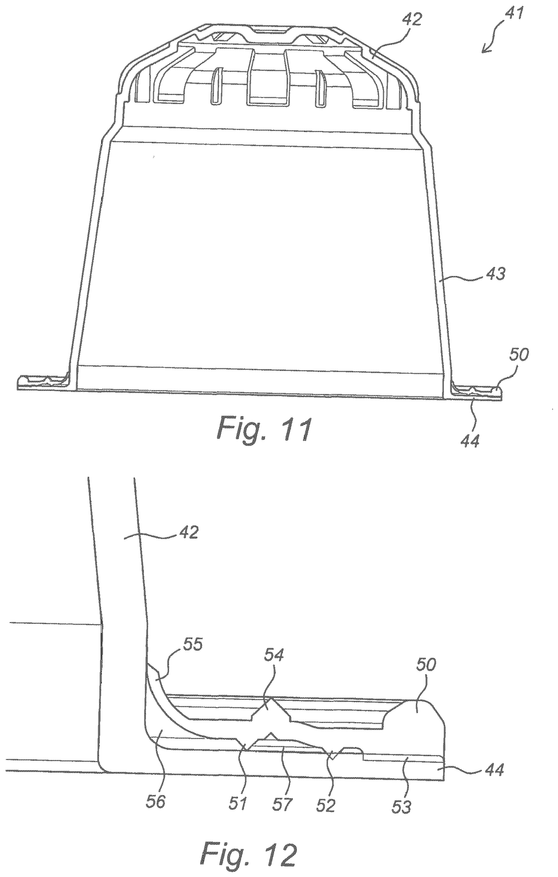

Fig. 11 diagrammatically shows a cross section of a capsule (41) according to the first embodiment of the present invention and according to Fig. 9, in which the sealing ring (50) is welded to the engagement edge (44).

Fig. 12 diagrammatically shows a detail of the sealing ring (50) and the engagement edge (44) in the attached position. The sealing ring (50) is fused to the engagement edge (44) by means of a weld seam (52). The outer peripheral edge (53) of the ring (50) is also welded to the engagement edge (44). At least two air chambers (56, 57) are situated between the sealing ring (50) and the engagement edge (44) of the capsule (41), one between the free end (55) and the engagement wall (44) and one between the two weld seams (51, 52). At the location of the air chambers (56, 57), the sealing ring (50) is more resilient and there is space for the sealing ring (50) to move in the direction of the flange (44). In this way, the sealing ring (50) can adapt better to the shape of a capsule holder (not shown) of a coffee machine.

The use of the capsule for preparing coffee can be described as follows. The capsule (41) is positioned clamped in an open capsule holder (not shown), after which the capsule holder is closed. During closing of the capsule holder, the engagement edge (44) and the sealing ring (50) attached thereto are clamped. In the course of clamping, the end side will be perforated by perforation elements of the capsule holder and the sealing ring (50) made from amorphous PLA will partly shape around a clamping edge of the capsule holder, thus creating a seal. Thereafter, hot water at a temperature of approximately 95°C is passed into the capsule holder and into the capsule (41) via the end side. As a result of this increase in pressure, the film/foil (not shown) will bulge and will be perforated by a perforation plate which forms part of the capsule holder, as a result of which coffee can be passed out of the capsule (41) and can be collected in the cup.

During this extraction process, the sealing ring (50) will partly crystallize to a semicrystalline state due to a "cold crystallization". In addition, the ring (50) will become slightly rubbery above the glass transition temperature (Tg) of PLA of approximately 55-60°C, which benefits the sealing effect. After the extraction process, the temperature of the sealing ring (50) will drop below the abovementioned glass transition temperature relatively quickly, as a result of which a relatively stiff, semicrystalline sealing ring (50) is obtained. Due to the increased stiffness compared to the initial amorphous state, the sealing ring (50), and thus the capsule (41), can be removed relatively easily from the capsule holder.

It will be clear that the invention is not limited to the illustrative embodiments illustrated and described herein, but that countless variants are possible without departing from the scope of the attached claims which will be obvious to the person skilled in the art.

## Claims

1. Capsule (1, 11, 41) for preparing beverages, comprising:
- a closed housing (2, 12, 22, 32, 42) which is at least partly filled with a substance to be extracted and/or to be dissolved, such as ground coffee, for preparing a beverage, in which the housing (2, 12, 22, 32, 42) is closed, in which the housing (2, 12, 22, 32, 42) is at least defined by a peripheral wall (3, 13, 23, 33, 43), an end side connected to the peripheral wall (3, 13, 23, 33, 43), and a laterally projecting engagement edge (4, 14, 24, 34, 44) which is connected to the peripheral wall (3, 13, 23, 33, 43) at a distance from the end side for enabling the capsule (1, 11, 41) to be clamped in a capsule holder of a device for preparing beverages; and
- at least one closed closing element (8, 18) which is connected to the laterally projecting engagement edge (4, 14, 24, 34, 44) for enclosing the substance in the capsule (1, 11, 41) in a preserving manner,
**characterized in that** the capsule (1, 11, 41) is completely compostable, and **in that** the housing (2, 12, 22, 32, 42) comprises at least one barrier layer (7, 17, 27, 37), which barrier layer (7, 17, 27, 37) is impermeable to oxygen, and **in that** the housing (2, 12, 22, 32, 42) comprises at least one material layer (5, 6, 15, 16, 25, 26, 35) surrounding the barrier layer (7, 17, 27, 37), and **in that** the at least one surrounding material (5, 6, 15, 16, 25, 26, 35) completely protects the barrier layer (7, 17, 27, 37) from the atmosphere surrounding the capsule (1, 11, 41), in which the housing (2. 12. 22, 32, 42) is at least partly made from polylactic acid (PLA), in which the at least one material layer (5, 6, 15, 16, 25, 26, 35) surrounding the oxygen barrier (7, 17, 27, 37) comprises at least 85% by weight of polylactic acid (PLA) and in which the oxygen barrier layer (7, 17, 27. 37) is at least partly made of a polyvinyl alcohol (PVOH).

2. Capsule (1, 11, 41) according to Claim 1, in which the engagement edge (4, 14, 24, 34, 44) is connected to an end of the peripheral wall (3, 13, 23, 33, 43) which is facing away from the end side.

3. Capsule (1, 11, 41) according to Claim 1 or 2, in which the peripheral wall (4, 14, 24, 34, 44) has a substantially frustoconical design.

4. Capsule (1, 11, 41) according to one of the preceding claims, in which the housing (2, 12, 22, 32, 42) is substantially rigid.

5. Capsule (1, 11, 41) according to one of the preceding claims, in which the oxygen barrier layer (7, 17, 27, 37) and the at least one material layer (5, 6, 15, 16, 25, 26, 35) surrounding the oxygen barrier layer (7, 17, 27, 37) are laminated to one another.

6. Capsule (1, 11, 41) according to one of the preceding claims, in which the at least one material layer (5, 6, 15, 16, 25, 26, 35) surrounding the oxygen barrier layer (7, 17, 27, 37) forms a moisture barrier (7, 17, 27, 37).

7. Capsule (1, 11, 41) according to Claim 6, in which the barrier layer (7, 17, 27, 27) is preferably completely enclosed by at least two surrounding material layers (5, 6, 15, 16, 25, 26, 35).

8. Capsule (1, 11, 41) according to Claims 6 and 7, in which the laminate comprises at least one oxygen-impermeable barrier layer (7, 17, 27, 37) which is enclosed by at least material layers (5, 6, 15, 16, 25, 26, 35), at least one material layer (5, 6, 15, 16, 25, 26, 35) of which is substantially water-impermeable.

9. Capsule (1, 11, 41) according to one of Claims 5-8, in which the laminate is manufactured by means of co-injection.

10. Capsule (1, 11, 41) according to one of the preceding claims, in which the at least one material layer (5, 6, 15, 16, 25, 26, 35) surrounding the oxygen barrier (7, 17, 27, 37) is substantially made from an amorphous polylactic acid (PLA).

11. Capsule (1, 11, 41) according to one of the preceding claims, in which the amorphous polylactic acid is enriched with at least one additive.

12. Capsule (1, 11, 41) according to Claim 11, in which the amorphous polylactic acid is provided with reinforcing fibres, in particular silica fibres.

13. Capsule (1, 11, 41) according to one of the preceding claims, in which the oxygen barrier layer (7, 17, 27, 37) comprises at least 70% by weight of a material which is substantially impermeable to oxygen.

14. Capsule (1, 11, 41) according to one of the preceding claims, in which the oxygen barrier layer (7, 17, 27, 37) is at least partly made from an aliphatic polyol, in particular from glycerol, wherein the oxygen barrier layer (7, 17, 27, 37) preferably comprises at most 20% by weight of aliphatic polyol, in particular glycerol.

15. Capsule (1, 11, 41) according to one of the preceding claims, in which the oxygen barrier layer (7, 17, 27, 37) forms between 0 and 15% by weight of the housing (2, 12, 22, 32, 42) and/or the at least one material layer (5, 6, 15, 16, 25, 26, 35) surrounding the barrier layer (7, 17, 27, 37) forms between 85 and 100% by weight of the housing(2, 12, 22, 32, 42).

16. Capsule (1, 11, 41) according to one of the preceding claims, in which the wall thickness of the housing (2, 12, 22, 32, 42) is between 0.3 and 0.6 millimetres.

17. Capsule (1, 11, 41) according to one of the preceding claims, in which the wall thickness of the peripheral wall of the housing (2, 12, 22, 32, 42) is greater than the wall thickness of the engagement edge (4, 14, 24, 34, 44) of the housing (2, 12, 22, 32, 42).

18. Capsule (1, 11, 41) according to one of the preceding claims, in which the wall thickness of the peripheral wall (4, 14, 24, 34, 44) of the housing (2, 12, 22, 32, 42) is greater than the wall thickness of the end side of the housing (2, 12, 22, 32, 42).

19. Capsule (1, 11, 41) according to Claim 16 and Claim 17 or 18, in which the total wall thickness of the peripheral wall (3, 13, 23, 33, 43) is between 0.4 and 0.6 millimetre, and the wall thickness of the engagement edge (4, 14, 24, 34, 44) and/or the end side is between 0.3 and 0.4 millimetres.

20. Capsule (1, 11, 41) according to one of the preceding claims, in which the layer thickness of the oxygen barrier layer (7, 17, 27, 37) is smaller than the layer thickness of at least one material layer (5, 6, 15, 16, 25, 26, 35) surrounding the oxygen barrier layer (7, 17, 27, 37).

21. Capsule (1, 11, 41) according to one of the preceding claims, in which the capsule (1, 11, 41) comprises a substantially compostable substantially annular sealing element (50) which is preferably attached to the engagement edge (4, 14, 24, 34, 44) and configured to substantially seal a space between the capsule (1, 11, 41) and a device for preparing beverages while the capsule (1, 11, 41) is clamped in the device.

22. Capsule (1, 11, 41) according to Claim 21, in which the sealing element (50) is at least partly made from at least one compostable polyester, in particular a polylactic acid (PLA).

23. Capsule (1, 11, 41) according to Claim 22, in which the sealing element (50) is at least partly made from an amorphous polylactic acid (PLA).

24. Capsule (1, 11, 41) according to Claim 22 or 23, in which the sealing element (50) is at least partly made from a composite material which comprises (i) at least one compostable polyester, in particular a polylactic acid (PLA), preferably an amorphous polylactic acid (PLA), and (ii) at least one elastomer based on thermoplastic copolyester (TPC).

25. Capsule (1, 11, 41) according to one of Claims 21-24, in which at least a part of the sealing element (50) is fused with the engagement edge.

26. Capsule (1, 11, 41) according to one of Claims 25, in which only an outer edge of the sealing element (50) is fused with the engagement edge (4, 14, 24, 34, 44), and in which an inner edge is not directly connected to the sealing element (50).

27. Capsule (1, 11, 41) according to Claim 26, in which the width of the outer edge of the sealing element (50) is substantially equal to the width of the inner edge of the sealing element (50).

28. Capsule (1, 11, 41) according to one of Claims 25-27, in which a part of the sealing element (50) is situated at a distance from the engagement edge (4, 14, 24, 34, 44).

29. Capsule (1, 11, 41) according to one of Claims 21-28, in which the width of the sealing element (50) substantially corresponds to the width of the engagement edge (4, 14, 24, 34, 44).

30. Capsule (1, 11, 41) according to one of Claims 21-27, in which the sealing element (50) increases the effective diameter of the capsule (1, 11, 41) .

31. Capsule (1, 11, 41) according to one of the preceding claims, in which the capsule (1, 11, 41) is at least partly made from at least one biobased material.

32. Capsule (1, 11, 41) according to one of the preceding claims, in which the closing element (8, 18) is formed by a substantially completely compostable film/foil (8, 18).

33. Capsule (1, 11, 41) according to one of the preceding claims, in which the closing element (8, 18) is glued to the housing (2, 12, 22, 32, 42) by using a substantially completely compostable adhesive.

34. Capsule (1, 11, 41) according to Claim 33, in which the adhesive comprises 1 to 70% by weight of compostable polymer, selected from the group consisting of: an aliphatic or partly aromatic polyester, and a thermoplastic aliphatic polyester urethane.

35. Capsule (1, 11, 41) according to one of the preceding claims, in which the capsule housing (2, 12, 32, 42) is at least partly made from cellulose.

36. Housing (2, 12, 32, 42) for use in a capsule (1, 11, 41) according to one of Claims 1-35.

37. Annular sealing element for use in a capsule (1, 11, 41) according to one of Claims 21-30.

38. Method for producing a capsule (1, 11, 41) for preparing beverages according to one of Claims 1-35, comprising the following steps:
A) manufacturing a housing (2, 12, 22, 32, 42) of the capsule (1, 11, 41) from at least one compostable material, in which the housing (2, 12, 22, 32, 42) is substantially closed, in which the housing (2, 12, 22, 32, 42) is at least defined by a peripheral wall (3, 13, 23, 33, 43), an end side connected to the peripheral wall (3, 13, 23, 33, 43) and a laterally projecting engagement edge (4, 14, 24, 34, 44) which is connected to the peripheral wall (3, 13, 23, 33, 43) at a distance from the end side for clamping the capsule (1, 11, 41) in a capsule holder of a device for preparing beverages;
B) manufacturing a closing element (8, 18) from at least one compostable material,
C) at least partly filling the housing (2, 12, 22, 32, 42) with a substance to be extracted and/or dissolved, such as ground coffee, for preparing a beverage; and
D) attaching the closing element (8, 18) to the housing (2, 12, 22, 32, 42) in such a way that the substance is enclosed in the capsule (1, 11, 41) in a substantially airtight manner,
in which the housing (2, 12, 22, 32, 42) comprises at least one barrier layer (7, 17, 27, 37), which barrier layer (7, 17, 27, 37) is substantially impermeable to oxygen, and in which the housing (2, 12, 22, 32, 42) comprises at least one material layer (5, 6, 15, 16, 25, 26, 35) surrounding the barrier layer (7, 17, 27, 37), in which the at least one surrounding material (5, 6, 15, 16, 25, 26, 35) completely protects the barrier layer (7, 17, 27, 37) from the atmosphere surrounding the capsule(1, 11, 41), in which the housing (2, 12, 22, 32, 42) is at least partly made from polylactic acid (PLA), in which the at least one material layer (5, 6, 15, 16, 25, 26, 35) surrounding the oxygen barrier (7, 17, 27, 37) comprises at least 85% by weight of polylactic acid (PLA) and in which the oxygen barrier layer (7, 17, 27, 37) is at least partly made of a polyvinyl alcohol (PVOH).

39. Method according to Claim 38, in which the housing (2, 12, 22, 32, 42) is manufactured in step A) by means of co-injecting in a mould at least one liquefied compostable material in order to form the at least one oxygen barrier layer (7, 17, 27, 37), and at least one liquefied compostable material in order to form the at least one material layer (5, 6, 15, 16, 25, 26, 35) surrounding the barrier layer (7, 17, 27, 37), following which the housing (2, 12, 22, 32, 42) is cooled to a temperature below the lowest melting temperature of the materials.

40. Method according to Claim 39, in which, during manufacture of the housing (2, 12, 22, 32, 42) by means of co-injection in step A), the oxygen barrier layer (7, 17, 27, 37) is completely enclosed by at least one surrounding material layer (5, 6, 15, 16, 25, 26, 35).

41. Assembly of a capsule (1, 11, 41) according to one of Claims 1-35, and a device for preparing beverages, which device comprises a capsule holder for receiving the capsule (1, 11, 41).

42. Assembly according to Claim 41, in which the capsule holder comprises several holder parts which are displaceable with respect to one another between an open position, in which the capsule (1, 11, 41) can be placed in the capsule holder, and a closed position, in which the engagement edge (4, 14, 24, 34, 44) and the sealing element (50) of the capsule (1, 11, 41) are clamped substantially in a liquid-tight manner by the holder parts.

43. Assembly according to Claim 42, in which the housing (2, 12, 22, 32, 42) and the sealing element (50 are perforated in the closed position of the capsule holder.

44. Use of a capsule (1, 11, 41) according to one of Claims 1-35 in a device for preparing beverages.

## Patentansprüche

1. Kapsel (1, 11, 41) zum Zubereiten von Getränken, die Folgendes aufweist:
ein geschlossenes Gehäuse (2, 12, 22, 32, 42), das zumindest teilweise mit einer Substanz gefüllt ist, die zu extrahieren und/oder zu lösen ist, wie etwa gemahlenem Kaffee, zum Zubereiten eines Getränks,
wobei das Gehäuse (2, 12, 22, 32, 42) geschlossen ist, wobei das Gehäuse (2, 12, 22, 32, 42) mindestens durch eine Umfangswand (3, 13, 23, 33, 43) definiert ist, wobei eine Endseite mit der Umfangswand (3, 13, 23, 33, 43) und einer seitlich vorstehenden Eingriffskante (4, 14, 24, 34, 44) verbunden ist, die mit der Umfangswand (3, 13, 23, 33, 43) in einem Abstand von der Endseite verbunden ist, um zu ermöglichen, die Kapsel (1, 11, 41) in einen Kapselhalter für eine Vorrichtung zum Zubereiten von Getränken einzuklemmen; und
mindestens ein geschlossenes Schließelement (8, 18), das mit der seitlich vorstehenden Eingriffskante (4, 14, 24, 34, 44) zum Umschließen der Substanz in der Kapsel (1, 11, 41) in einer erhaltenden Weise verbunden ist,
**dadurch gekennzeichnet, dass** die Kapsel (1, 11, 41) vollständig kompostierbar ist und dass das Gehäuse (2, 12, 22, 32, 42) mindestens eine Barriereschicht (7, 17, 27, 37) aufweist, wobei die Barriereschicht (7, 17, 27, 37) sauerstoffundurchlässig ist, und dass das Gehäuse (2, 12, 22, 32, 42) mindestens eine Materialschicht (5, 6, 15, 16, 25, 26, 35) aufweist, die die Barriereschicht (7, 17, 27, 37) umgibt, und
dass das mindestens eine umgebende Material (5, 6, 15, 16, 25, 26, 35) die Barriereschicht (7, 17, 27, 37) vollständig vor der Atmosphäre schützt, die die Kapsel (1, 11, 41) umgibt, wobei das Gehäuse (2, 12, 22, 32, 42) zumindest teilweise aus Polymilchsäure (PLA) hergestellt ist, wobei die mindestens eine Materialschicht (5, 6, 15, 16, 25, 26, 35), die die Sauerstoff-Barriere (7, 17, 27, 37) umgibt,
mindestens 85 Gew.-% Polymilchsäure (PLA) aufweist und wobei die Sauerstoff-Barriereschicht (7, 17, 27, 37) zumindest teilweise aus einem Polyvinylalkohol (PVA) hergestellt ist.

2. Kapsel (1, 11, 41) nach Anspruch 1, wobei die Eingriffskante (4, 14, 24, 34, 44) mit einem Ende der Umfangswand (3, 13, 23, 33, 43) verbunden ist, das von der Endseite abgewandt ist.

3. Kapsel (1, 11, 41) nach Anspruch 1 oder 2, wobei die Umfangswand (4, 14, 24, 34, 44) eine im Wesentlichen kegelstumpfförmige Ausbildung hat.

4. Kapsel (1, 11, 41) nach einem der vorhergehenden Ansprüche, wobei das Gehäuse (2, 12, 22, 32, 42) im Wesentlichen starr ist.

5. Kapsel (1, 11, 41) nach einem der vorhergehenden Ansprüche, wobei die Sauerstoff-Barriereschicht (7, 17, 27, 37) und die mindestens eine Materialschicht (5, 6, 15, 16, 25, 26, 35), die die Sauerstoff-Barriereschicht (7, 17, 27, 37) umgibt, aufeinander laminiert sind.

6. Kapsel (1, 11, 41) nach einem der vorhergehenden Ansprüche, wobei die mindestens eine Materialschicht (5, 6, 15, 16, 25, 26, 35), die die Sauerstoff-Barriereschicht (7, 17, 27, 37) umgibt, eine Feuchtigkeitsbarriere (7, 17, 27, 37) bildet.

7. Kapsel (1, 11, 41) nach Anspruch 6, wobei die Barriereschicht (7, 17, 27, 27) vorzugsweise vollständig durch mindestens zwei umgebende Materialschichten (5, 6, 15, 16, 25, 26, 35) umschlossen ist.

8. Kapsel (1, 11, 41) nach Anspruch 6 und 7, wobei das Laminat mindestens eine sauerstoffundurchlässige Barriereschicht (7, 17, 27, 37) aufweist, die mindestens durch Materialschichten (5, 6, 15, 16, 25, 26, 35) umschlossen ist, wovon mindestens eine Materialschicht (5, 6, 15, 16, 25, 26, 35) im Wesentlichen wasserundurchlässig ist.

9. Kapsel (1, 11, 41) nach einem der Ansprüche 5-8, wobei das Laminat mittels Kospritzgießen gefertigt ist.

10. Kapsel (1, 11, 41) nach einem der vorhergehenden Ansprüche, wobei die mindestens eine Materialschicht (5, 6, 15, 16, 25, 26, 35), die die Sauerstoff-Barriere (7, 17, 27, 37) umgibt, im Wesentlichen aus einer amorphen Polymilchsäure (PLA) hergestellt ist.

11. Kapsel (1, 11, 41) nach einem der vorhergehenden Ansprüche, wobei die amorphe Polymilchsäure mit mindestens einem Zusatzstoff angereichert ist.

12. Kapsel (1, 11, 41) nach Anspruch 11, wobei die amorphe Polymilchsäure mit verstärkenden Fasern, insbesondere Siliziumdioxidfasern bereitgestellt ist.

13. Kapsel (1, 11, 41) nacheinem der vorhergehenden Ansprüche, wobei die Sauerstoff-Barriereschicht (7, 17, 27, 37) mindestens 70-Gew.% eines Materials aufweist, das im Wesentlichen sauerstoffundurchlässig ist.

14. Kapsel (1, 11, 41) nach einem der vorhergehenden Ansprüche, wobei die Sauerstoff-Barriereschicht (7, 17, 27, 37) zumindest teilweise aus einem aliphatischen Polyol, insbesondere aus Glycerin hergestellt ist, wobei die Sauerstoff-Barriereschicht (7, 17, 27, 37) vorzugsweise höchstens 20-Gew.% aliphatisches Polyol, insbesondere Glycerin aufweist.

15. Kapsel (1, 11, 41) nach einem der vorhergehenden Ansprüche, wobei die Sauerstoff-Barriereschicht (7, 17, 27, 37) zwischen 0 und 15 Gew.-% des Gehäuses (2, 12, 22, 32, 42) bildet und/oder die mindestens eine Materialschicht (5, 6, 15, 16, 25, 26, 35), die die Barriereschicht (7, 17, 27, 37) umgibt, zwischen 85 und 100 Gew.-% des Gehäuses (2, 12, 22, 32, 42) bildet.

16. Kapsel (1, 11, 41) nach einem der vorhergehenden Ansprüche, wobei die Wanddicke des Gehäuses (2, 12, 22, 32, 42) zwischen 0,3 und 0,6 Millimeter beträgt.

17. Kapsel (1, 11, 41) nach einem der vorhergehenden Ansprüche, wobei die Wanddicke der Umfangswand des Gehäuses (2, 12, 22, 32, 42) größer als die Wanddicke der Eingriffskante (4, 14, 24, 34, 44) des Gehäuses (2, 12, 22, 32, 42) ist.

18. Kapsel (1, 11, 41) nach einem der vorhergehenden Ansprüche, wobei die Wanddicke der Umfangswand (4, 14, 24, 34, 44) des Gehäuses (2, 12, 22, 32, 42) größer als die Wanddicke der Endseite des Gehäuses (2, 12, 22, 32, 42) ist.

19. Kapsel (1, 11, 41) nach Anspruch 16 und Anspruch 17 oder 18, wobei die Gesamtwanddicke der Umfangswand (3, 13, 23, 33, 43) zwischen 0,4 und 0,6 Millimeter beträgt und die Wanddicke der Eingriffskante (4, 14, 24, 34, 44) und/oder der Endseite zwischen 0,3 und 0,4 Millimeter beträgt.

20. Kapsel (1, 11, 41) nach einem der vorhergehenden Ansprüche, wobei die Schichtdicke der Sauerstoff-Barriereschicht (7, 17, 27, 37) kleiner als die Schichtdicke von mindestens einer Materialschicht (5, 6, 15, 16, 25, 26, 35) ist, die die Sauerstoff-Barriereschicht (7, 17, 27, 37) umgibt.

21. Kapsel (1, 11, 41) nach einem der vorhergehenden Ansprüche, wobei die Kapsel (1, 11, 41) ein im Wesentlichen kompostierbares im Wesentlichen ringförmiges Dichtungselement (50) aufweist, das vorzugsweise an die Eingriffskante (4, 14, 24, 34, 44) angebracht und konfiguriert ist, um im Wesentlichen einen Raum zwischen der Kapsel (1, 11, 41) und einer Vorrichtung zum Zubereiten von Getränken abzudichten, während die Kapsel (1, 11, 41) in der Vorrichtung eingeklemmt ist.

22. Kapsel (1, 11, 41) nach Anspruch 21, wobei das Dichtungselement (50) zumindest teilweise aus mindestens einem kompostierbaren Polyester, insbesondere einer Polymilchsäure (PLA) hergestellt ist.

23. Kapsel (1, 11, 41) nach Anspruch 22, wobei das Dichtungselement (50) zumindest teilweise aus einer amorphen Polymilchsäure (PLA) hergestellt ist.

24. Kapsel (1, 11, 41) nach Anspruch 22 oder 23, wobei das Dichtungselement (50) zumindest teilweise aus einem Verbundwerkstoff hergestellt ist, das (i) mindestens einen kompostierbaren Polyester, insbesondere eine Polymilchsäure (PLA), vorzugsweise eine amorphe Polymilchsäure (PLA) aufweist, und (ii) mindestens ein Elastomer basierend auf thermoplastischem Copolyester (TPC) aufweist.

25. Kapsel (1, 11, 41) nach einem der Ansprüche 21-24, wobei mindestens ein Teil des Dichtungselements (50) mit der Eingriffskante verschmolzen ist.

26. Kapsel (1, 11, 41) nach einem der Ansprüche 25, wobei nur eine äußere Kante des Dichtungselements (50) mit der Eingriffskante (4, 14, 24, 34, 44) verschmolzen ist und wobei eine innere Kante nicht direkt mit dem Dichtungselement (50) verbunden ist.

27. Kapsel (1, 11, 41) nach Anspruch 26, wobei die Breite der äußeren Kante des Dichtungselements (50) im Wesentlichen gleich der Breite der inneren Kante des Dichtungselements (50) ist.

28. Kapsel (1, 11, 41) nach einem der Ansprüche 25-27, wobei sich ein Teil des Dichtungselements (50) in einem Abstand von der Eingriffskante (4, 14, 24, 34, 44) befindet.

29. Kapsel (1, 11, 41) nach einem der Ansprüche 21-28, wobei die Breite des Dichtungselements (50) im Wesentlichen der Breite der Eingriffskante (4, 14, 24, 34, 44) entspricht.

30. Kapsel (1, 11, 41) nach einem der Ansprüche 21-27, wobei das Dichtungselement (50) den effektiven Durchmesser der Kapsel (1, 11, 41) erhöht.

31. Kapsel (1, 11, 41) nach einem der vorhergehenden Ansprüche, wobei die Kapsel (1, 11, 41) zumindest teilweise aus mindestens einem biobasierten Material hergestellt ist.

32. Kapsel (1, 11, 41) nach einem der vorhergehenden Ansprüche, wobei das Schließelement (8, 18) durch eine/n im Wesentlichen vollständig kompostierbare/n Film/Folie (8, 18) gebildet ist.

33. Kapsel (1, 11, 41) nach einem der vorhergehenden Ansprüche, wobei das Schließelement (8, 18) an das Gehäuse (2, 12, 22, 32, 42) unter Verwendung eines im Wesentlichen vollständig kompostierbaren Klebemittels geklebt ist.

34. Kapsel (1, 11, 41) nach Anspruch 33, wobei das Klebemittel 1 bis 70 Gew.-% kompostierbares Polymer aufweist, das aus der Gruppe ausgewählt ist, die aus Folgendem besteht: einem aliphatischen oder teilweise aromatischen Polyester und einem thermoplastischen aliphatischen Polyesterurethan.

35. Kapsel (1, 11, 41) nach einem der vorhergehenden Ansprüche, wobei das Kapselgehäuse (2, 12, 32, 42) zumindest teilweise aus Zellulose hergestellt ist.

36. Gehäuse (2, 12, 32, 42) zum Verwenden in einer Kapsel (1, 11, 41) nach einem der Ansprüche 1-35.

37. Ringförmiges Dichtungselement zum Verwenden in einer Kapsel (1, 11, 41) nach einem der Ansprüche 21-30.

38. Verfahren zum Produzieren einer Kapsel (1, 11, 41) zum Zubereiten von Getränken nach einem der Ansprüche 1-35, das die folgenden Schritte aufweist:
A) Fertigen eines Gehäuses (2, 12, 22, 32, 42) der Kapsel (1, 11, 41) aus mindestens einem kompostierbaren Material, wobei das Gehäuse (2, 12, 22, 32, 42) im Wesentlichen geschlossen ist, wobei das Gehäuse (2, 12, 22, 32, 42) mindestens durch eine Umfangswand (3, 13, 23, 33, 43) definiert ist, wobei eine Endseite mit der Umfangswand (3, 13, 23, 33, 43) und einer seitlich vorstehenden Eingriffskante (4, 14, 24, 34, 44) verbunden ist, die mit der Umfangswand (3, 13, 23, 33, 43) in einem Abstand von der Endseite zum Einklemmen der Kapsel (1, 11, 41) in einen Kapselhalter einer Vorrichtung zum Zubereiten von Getränken verbunden ist;
B) Fertigen eines Schließelements (8, 18) aus mindestens einem kompostierbaren Material,
C) zumindest teilweises Befüllen des Gehäuses (2, 12, 22, 32, 42) mit einer Substanz, die zu extrahieren und/oder zu lösen ist, wie etwa gemahlenem Kaffee, zum Zubereiten eines Getränks; und
D) Anbringen des Schließelements (8, 18) an das Gehäuse (2, 12, 22, 32, 42) in einer derartigen Weise, dass die Substanz in der Kapsel (1, 11, 41) in einer im Wesentlichen luftdichten Weise umschlossen ist,
wobei das Gehäuse (2, 12, 22, 32, 42) mindestens eine Barriereschicht (7, 17, 27, 37) aufweist, wobei die Barriereschicht (7, 17, 27, 37) im Wesentlichen sauerstoffundurchlässig ist und wobei das Gehäuse (2, 12, 22, 32, 42) mindestens eine Materialschicht (5, 6, 15, 16, 25, 26, 35) aufweist, die die Barriereschicht (7, 17, 27, 37) umgibt, wobei das mindestens eine umgebende Material (5, 6, 15, 16, 25, 26, 35) die Barriereschicht (7, 17, 27, 37) vor der Atmosphäre, die die Kapsel (1, 11, 41) umgibt, vollständig schützt, wobei das Gehäuse (2, 12, 22, 32, 42) zumindest teilweise aus Polymilchsäure (PLA) hergestellt ist, wobei die mindestens eine Materialschicht (5, 6, 15, 16, 25, 26, 35), die die Sauerstoff-Barriere (7, 17, 27, 37) umgibt, mindestens 85 Gew.-% Polymilchsäure (PLA) aufweist und wobei die Sauerstoff-Barriereschicht (7, 17, 27, 37) zumindest teilweise aus einem Polyvinylalkohol (PVA) hergestellt ist.

39. Verfahren nach Anspruch 38, wobei das Gehäuse (2, 12, 22, 32, 42) in Schritt A) mittels Kospritzgießen in eine Form von mindestens einem verflüssigten kompostierbaren Material gefertigt wird, um die mindestens eine Sauerstoff-Barriereschicht (7, 17, 27, 37) zu bilden, und von mindestens einem verflüssigten kompostierbaren Material, um die mindestens eine Materialschicht (5, 6, 15, 16, 25, 26, 35) zu bilden, die die Barriereschicht (7, 17, 27, 37) umgibt, wonach das Gehäuse (2, 12, 22, 32, 42) auf eine Temperatur unter der niedrigsten Schmelztemperatur der Materialien abgekühlt wird.

40. Verfahren nach Anspruch 39, wobei während eines Fertigens des Gehäuses (2, 12, 22, 32, 42) mittels Kospritzgießen in Schritt A) die Sauerstoff-Barriereschicht (7, 17, 27, 37) vollständig durch mindestens eine umgebende Materialschicht (5, 6, 15, 16, 25, 26, 35) umschlossen ist.

41. Anordnung einer Kapsel (1, 11, 41) nach einem der Ansprüche 1-35 und einer Vorrichtung zum Zubereiten von Getränken, wobei die Vorrichtung einen Kapselhalter zum Aufnehmen der Kapsel (1, 11, 41) aufweist.

42. Anordnung nach Anspruch 41, wobei der Kapselhalter mehrere Halterteile aufweist, die in Bezug auf einander zwischen einer offenen Position, in der die Kapsel (1, 11, 41) in den Kapselhalter platziert werden kann, und einer geschlossenen Position, in der die Eingriffskante (4, 14, 24, 34, 44) und das Dichtungselement (50) der Kapsel (1, 11, 41) im Wesentlichen in einer flüssigkeitsdichten Weise durch die Halterteile eingeklemmt sind, verschiebbar sind.

43. Anordnung nach Anspruch 42, wobei das Gehäuse (2, 12, 22, 32, 42) und das Dichtungselement (50) in der geschlossenen Position des Kapselhalters perforiert sind.

44. Verwendung einer Kapsel (1, 11, 41) nach einem der Ansprüche 1-35 in einer Vorrichtung zum Zubereiten von Getränken.

## Revendications

1. Capsule (1, 11, 41) pour préparer des boissons, comprenant:
une enceinte fermée (2, 12, 22, 32, 42) qui est au moins partiellement remplie d'une substance à extraire et/ou à dissoudre, telle que du café moulu, pour préparer une boisson, dans laquelle l'enceinte (2, 12, 22, 32, 42) est fermée, dans laquelle l'enceinte (2, 12, 22, 32, 42) est au moins définie par une paroi périphérique (3, 13, 23, 33, 43), un côté d'extrémité connecté à la paroi périphérique (3, 13, 23, 33, 43), et un bord d'engagement latéralement saillant (4, 14, 24, 34, 44) qui est connecté à la paroi périphérique (3, 13, 23, 33, 43) à une distance du côté d'extrémité pour permettre à une capsule (1, 11, 41) d'être serrée dans un support de capsule d'un dispositif de préparation de boissons; et
au moins un élément de fermeture fermé (8, 18) qui est connecté au bord d'engagement latéralement saillant (4, 14, 24, 34, 44) pour enfermer la substance présente dans la capsule (1, 11, 41) d'une manière protégée,
**caractérisée en ce que** la capsule (1, 11, 41) peut être complètement compostée, et **en ce que** l'enceinte (2, 12, 22, 32, 42) comprend au moins une couche de barrière (7, 17, 27, 37), ladite couche de barrière (7, 17, 27, 37) étant imperméable à l'oxygène, et **en ce que** l'enceinte (2, 12, 22, 32, 42) comprend au moins une couche de matière (5, 6, 15, 16, 25, 26, 35) entourant la couche de barrière (7, 17, 27, 37), et **en ce que** ladite au moins une matière enveloppante (5, 6, 15, 16, 25, 26, 35) protège complètement la couche de barrière (7, 17, 27, 37) de l'atmosphère qui entoure la capsule (1, 11, 41), dans laquelle l'enceinte (2, 12, 22, 32, 42) est au moins partiellement fabriquée en un acide polylactique (PLA), dans laquelle l'au moins une couche de matière (5, 6, 15, 16, 25, 26, 35) entourant la barrière à l'oxygène (7, 17, 27, 37) comprend au moins 85 % en poids d'acide polylactique (PLA) et dans laquelle la couche de barrière à l'oxygène (7, 17, 27, 37) est au moins partiellement fabriquée en un poly(alcool vinylique) (PVOH).

2. Capsule (1, 11, 41) selon la revendication 1, dans laquelle le bord d'engagement (4, 14, 24, 34, 44) est connecté à une extrémité de la paroi périphérique (3, 13, 23, 33, 43) qui est à l'opposé du côté d'extrémité.

3. Capsule (1, 11, 41) selon la revendication 1 ou 2, dans laquelle la paroi périphérique (4, 14, 24, 34, 44) présente une allure sensiblement tronconique.

4. Capsule (1, 11, 41) selon l'une des revendications précédentes, dans laquelle l'enceinte (2, 12, 22, 32, 42) est sensiblement rigide.

5. Capsule (1, 11, 41) selon l'une des revendications précédentes, dans laquelle la couche de barrière à l'oxygène (7, 17, 27, 37) et ladite au moins une couche de matière (5, 6, 15, 16, 25, 26, 35) entourant la couche de barrière à l'oxygène (7, 17, 27, 37) sont stratifiées l'une sur l'autre.

6. Capsule (1, 11, 41) selon l'une des revendications précédentes, dans laquelle ladite au moins une couche de matière (5, 6, 15, 16, 25, 26, 35) entourant la couche de barrière à l'oxygène (7, 17, 27, 37) forme une barrière contre l'humidité (7, 17, 27, 37).

7. Capsule (1, 11, 41) selon la revendication 6, dans laquelle la couche de barrière (7, 17, 27, 27) est de préférence complètement enfermée par au moins deux couches de matière enveloppantes (5, 6, 15, 16, 25, 26, 35) .

8. Capsule (1, 11, 41) selon les revendications 6 et 7, dans laquelle le stratifié comprend au moins une couche de barrière imperméable à l'oxygène (7, 17, 27, 37) qui est enfermée par au moins deux couches de matière (5, 6, 15, 16, 25, 26, 35), dont au moins une couche de matière (5, 6, 15, 16, 25, 26, 35) est sensiblement imperméable à l'eau.

9. Capsule (1, 11, 41) selon l'une des revendications 5 à 8, dans laquelle le stratifié est fabriqué par le biais d'une co-injection.

10. Capsule (1, 11, 41) selon l'une des revendications précédentes, dans laquelle l'au moins une couche de matière (5, 6, 15, 16, 25, 26, 35) entourant la barrière à l'oxygène (7, 17, 27, 37) est sensiblement fabriquée en un acide polylactique (PLA) amorphe.

11. Capsule (1, 11, 41) selon l'une des revendications précédentes, dans laquelle l'acide polylactique amorphe est enrichi avec au moins un additif.

12. Capsule (1, 11, 41) selon la revendication 11, dans laquelle l'acide polylactique amorphe est doté de fibres de renforcement, en particulier de fibres de silice.

13. Capsule (1, 11, 41) selon l'une des revendications précédentes, dans laquelle la couche de barrière à l'oxygène (7, 17, 27, 37) comprend au moins 70 % en poids d'un matériau qui est sensiblement imperméable à l'oxygène.

14. Capsule (1, 11, 41) selon l'une des revendications précédentes, dans laquelle la couche de barrière à l'oxygène (7, 17, 27, 37) est au moins en partie fabriquée d'un polyol aliphatique, en particulier de glycérol, dans laquelle la couche de barrière à l'oxygène (7, 17, 27, 37) comprend de préférence au plus 20 % en poids de polyol aliphatique, en particulier de glycérol.

15. Capsule (1, 11, 41) selon l'une des revendications précédentes, dans laquelle la couche de barrière à l'oxygène (7, 17, 27, 37) forme entre 0 et 15 % en poids de l'enceinte (2, 12, 22, 32, 42) et/ou ladite au moins une couche de matière (5, 6, 15, 16, 25, 26, 35) entourant la couche de barrière (7, 17, 27, 37) forme entre 85 et 100 % en poids de l'enceinte (2, 12, 22, 32, 42).

16. Capsule (1, 11, 41) selon l'une des revendications précédentes, dans laquelle l'épaisseur de paroi de l'enceinte (2, 12, 22, 32, 42) est comprise entre 0,3 et 0,6 millimètres.

17. Capsule (1, 11, 41) selon l'une des revendications précédentes, dans laquelle l'épaisseur de paroi de la paroi périphérique de l'enceinte (2, 12, 22, 32, 42) est supérieure à l'épaisseur de paroi du bord d'engagement (4, 14, 24, 34, 44) de l'enceinte (2, 12, 22, 32, 42).

18. Capsule (1, 11, 41) selon l'une des revendications précédentes, dans laquelle l'épaisseur de paroi de la paroi périphérique (4, 14, 24, 34, 44) de l'enceinte (2, 12, 22, 32, 42) est supérieure à l'épaisseur de paroi du côté d'extrémité de l'enceinte (2, 12, 22, 32, 42) .

19. Capsule (1, 11, 41) selon la revendication 16 et la revendication 17 ou 18, dans laquelle l'épaisseur de paroi totale de la paroi périphérique (3, 13, 23, 33, 43) est comprise entre 0,4 et 0,6 millimètres, et l'épaisseur de paroi du bord d'engagement (4, 14, 24, 34, 44) et/ou du côté d'extrémité est comprise entre 0,3 et 0,4 millimètres.

20. Capsule (1, 11, 41) selon l'une des revendications précédentes, dans laquelle l'épaisseur de couche de la couche de barrière à l'oxygène (7, 17, 27, 37) est inférieure à l'épaisseur de couche de ladite au moins une couche de matière (5, 6, 15, 16, 25, 26, 35) entourant la couche de barrière à l'oxygène (7, 17, 27, 37) .

21. Capsule (1, 11, 41) selon l'une des revendications précédentes, dans laquelle la capsule (1, 11, 41) comprend un élément d'étanchéité annulaire compostable (50), qui est de préférence attaché au bord d'engagement (4, 14, 24, 34, 44) et configuré de façon à obturer sensiblement un espace entre la capsule (1, 11, 41) et un dispositif pour préparer des boissons pendant que la capsule (1, 11, 41) est serrée dans le dispositif.

22. Capsule (1, 11, 41) selon la revendication 21, dans laquelle l'élément d'étanchéité (50) est au moins en partie constitué d'au moins un polyester compostable, en particulier d'un acide polylactique (PLA).

23. Capsule (1, 11, 41) selon la revendication 22, dans laquelle l'élément d'étanchéité (50) est au moins en partie constitué d'un acide polylactique amorphe (PLA).

24. Capsule (1, 11, 41) selon la revendication 22 ou 23, dans laquelle l'élément d'étanchéité (50) est au moins en partie constitué d'un matériau composite qui comprend (i) au moins un polyester compostable, en particulier un acide polylactique (PLA), de préférence un acide polylactique amorphe (PLA), et (ii) au moins un élastomère basé sur un copolyester thermoplastique (TPC).

25. Capsule (1, 11, 41) selon l'une des revendications 21 à 24, dans laquelle au moins une partie de l'élément d'étanchéité (50) est fondue avec le bord d'engagement.

26. Capsule (1, 11, 41) selon la revendication 25, dans laquelle seul un bord extérieur de l'élément d'étanchéité (50) est fondu avec le bord d'engagement (4, 14, 24, 34, 44), et dans laquelle un bord intérieur n'est pas connecté directement à l'élément d'étanchéité (50) .

27. Capsule (1, 11, 41) selon la revendication 26, dans laquelle la largeur du bord extérieur de l'élément d'étanchéité (50) est sensiblement égale à la largeur du bord intérieur de l'élément d'étanchéité (50).

28. Capsule (1, 11, 41) selon l'une des revendications 25 à 27, dans laquelle une partie de l'élément d'étanchéité (50) est située à une distance du bord d'engagement (4, 14, 24, 34, 44).

29. Capsule (1, 11, 41) selon l'une des revendications 21 à 28, dans laquelle la largeur de l'élément d'étanchéité (50) correspond sensiblement à la largeur du bord d'engagement (4, 14, 24, 34, 44).

30. Capsule (1, 11, 41) selon l'une des revendications 21 à 27, dans laquelle l'élément d'étanchéité (50) augmente le diamètre effectif de la capsule (1, 11, 41) .

31. Capsule (1, 11, 41) selon l'une des revendications précédentes, dans laquelle la capsule (1, 11, 41) est au moins en partie fabriquée en au moins un biomatériau.

32. Capsule (1, 11, 41) selon l'une des revendications précédentes, dans laquelle l'élément de fermeture (8, 18) est constitué par un(e) film/feuille complètement compostable.

33. Capsule (1, 11, 41) selon l'une des revendications précédentes, dans laquelle l'élément de fermeture (8, 18) est collé à l'enceinte (2, 12, 22, 32, 42) en utilisant un adhésif complètement compostable.

34. Capsule (1, 11, 41) selon la revendication 33, dans laquelle l'adhésif comprend 1 à 70 % en poids de polymère compostable, sélectionné dans le groupe composé de: un polyester aliphatique ou partiellement aromatique, et un uréthane de polyester aliphatique thermoplastique.

35. Capsule (1, 11, 41) selon l'une des revendications précédentes, dans laquelle l'enceinte (2, 12, 22, 32, 42) de la capsule est au moins en partie constituée de cellulose.

36. Enceinte (2, 12, 32, 42) à utiliser dans une capsule (1, 11, 41) selon l'une des revendications 1 à 35.

37. Elément d'étanchéité annulaire, qui est compostable, à utiliser dans une capsule (1, 11, 41) selon l'une des revendications 21 à 30.

38. Procédé pour la production d'une capsule (1, 11, 41) pour la préparation de boissons selon l'une des revendications 1 à 35, comprenant les étapes suivantes:
A) fabriquer une enceinte (2, 12, 22, 32, 42) de la capsule (1, 11, 41) à partir d'au moins un matériau compostable, dans laquelle l'enceinte (2, 12, 22, 32, 42) est sensiblement fermée, dans laquelle l'enceinte (2, 12, 22, 32, 42) est au moins définie par une paroi périphérique (3, 13, 23, 33, 43), un côté d'extrémité connecté à la paroi périphérique (3, 13, 23, 33, 43) et un bord d'engagement latéralement saillant (4, 14, 24, 34, 44) qui est connecté à la paroi périphérique (3, 13, 23, 33, 43) à une distance du côté d'extrémité pour serrer la capsule (1, 11, 41) dans un support de capsule d'un dispositif de préparation de boissons;
B) fabriquer un élément de fermeture (8, 18) à partir d'au moins un matériau compostable;
C) remplir au moins partiellement l'enceinte (2, 12, 22, 32, 42) avec une substance à extraire et/ou à dissoudre, telle que du café moulu, pour préparer une boisson; et
D) attacher l'élément de fermeture (8, 18) à l'enceinte (2, 12, 22, 32, 42) d'une manière telle que la substance soit enfermée dans la capsule (1, 11, 41) d'une manière sensiblement étanche à l'air,
dans lequel l'enceinte (2, 12, 22, 32, 42) comprend au moins une couche de barrière (7, 17, 27, 37), ladite couche de barrière (7, 17, 27, 37) étant sensiblement imperméable à l'oxygène, et dans lequel l'enceinte (2, 12, 22, 32, 42) comprend au moins une couche de matière (5, 6, 15, 16, 25, 26, 35) entourant la couche de barrière (7, 17, 27, 37), dans lequel ledit au moins un matériau enveloppant (5, 6, 15, 16, 25, 26, 35) protège complètement la couche de barrière (7, 17, 27, 37) de l'atmosphère entourant la capsule (1, 11, 41), dans lequel l'enceinte (2, 12, 22, 32, 42) est au moins partiellement fabriquée en un acide polylactique (PLA), dans lequel l'au moins une couche de matière (5, 6, 15, 16, 25, 26, 35) entourant la barrière à l'oxygène (7, 17, 27, 37) comprend au moins 85 % en poids d'acide polylactique (PLA) et dans lequel la couche de barrière à l'oxygène (7, 17, 27, 37) est au moins partiellement fabriquée en un poly(alcool vinylique) (PVOH).

39. Procédé selon la revendication 38, dans lequel l'enceinte (2, 12, 22, 32, 42) est fabriquée à l'étape A) par le biais de la co-injection dans un moule d'au moins un matériau compostable liquéfié afin de former ladite au moins une couche de barrière à l'oxygène (7, 17, 27, 37) et d'au moins un matériau compostable liquéfié afin de former ladite au moins une couche de matière (5, 6, 15, 16, 25, 26, 35) entourant la couche de barrière (7, 17, 27, 37), puis l'enceinte (2, 12, 22, 32, 42) est refroidie à une température inférieure à la plus basse température de fusion des matériaux.

40. Procédé selon la revendication 39, dans lequel, pendant la fabrication de l'enceinte (2, 12, 22, 32, 42) par le biais d'une co-injection à l'étape A), la couche de barrière à l'oxygène (7, 17, 27, 37) est enfermée complètement par au moins une couche de matière (5, 6, 15, 16, 25, 26, 35).

41. Ensemble d'une capsule (1, 11, 41) selon l'une des revendications 1 à 35 et d'un dispositif pour la préparation de boissons, ledit dispositif comportant un support de capsule destiné à recevoir la capsule (1, 11, 41).

42. Ensemble selon la revendication 41, dans lequel le support de capsule comprend plusieurs parties de support qui sont déplaçables l'une par rapport à l'autre entre une position ouverte, dans laquelle la capsule (1, 11, 41) peut être placée dans le support de capsule, et une position fermée, dans laquelle le bord d'engagement (4, 14, 24, 34, 44) et l'élément d'étanchéité (50) de la capsule (1, 11, 41) sont serrés d'une manière sensiblement étanche au liquide par les parties de support.

43. Ensemble selon la revendication 42, dans lequel l'enceinte (2, 12, 22, 32, 42) et l'élément d'étanchéité (50) sont perforés dans la position fermée du support de capsule.

44. Utilisation d'une capsule (1, 11, 41) selon l'une des revendications 1 à 35 dans un dispositif pour la préparation de boissons.
